# EUROPEAN PATENT SPECIFICATION

(11) **EP 3 085 647 B1**
(45) Date of publication and mention of the grant of the patent: **17.07.2019**
(21) Application number: 14861808.5
(22) Date of filing: 11.11.2014
(51) Int. Cl.: B65G 47/91, B25J 15/06

(54) **SUCKING DISC**
SAUGSCHEIBE
DISQUE D'ASPIRATION

(30) Priority: 13.11.2013 CN 201310571285
(43) Date of publication of application: 26.10.2016
(73) Proprietor: Zhejiang University, Hangzhou, Zhejiang 310027 (CN)
(72) Inventor: LI, Xin, Hangzhou Zhejiang 310027 (CN)
(74) Representative: Sun, Yiming
(86) International application number: PCT/CN2014/090796
(87) International publication number: WO 2015/070742

(56) References cited:
- WO-A1-97/45862
- WO-A2-01/41962
- CN-A- 101 172 540
- CN-Y- 201 369 321
- DE-A1-102011 111 768
- US-A- 5 067 762
- US-A1- 2013 234 194
- US-B1- 6 435 200
- US-B2- 8 196 983

## Description

### TECHNICAL FIELD

The present invention relates to a sucking disc. In particular the invention relates to a sucking disc for sucking a work piece, including a sucking disc body defining a chamber with a circular cross section inside the sucking disc body; the chamber having a closed end surface and an opening end surface, the opening end surface formed to be an end surface for absorbing an object, and tangential nozzles disposed on a wall surface of the chamber.

### BACKGROUND

A sucking disc of such generic type is disclosed in document CN 3640313 S.

A mechanical clip tool typically has two or more splints which are capable of being opened and closed, so as to carry out a squeeze operation by forcedly squeezing the splints. However, the mechanical clip tool fails to pick up a soft sheet-shaped work piece (such as a slice of bread, a tomato slice or the like), and because there exists wear-out between various mechanical parts, the work load of routine maintenance is heavy.

A rubber vacuum sucking disc has such advantages as simple structure and easy to repair and maintain, which is a pickup tool commonly used in a line of food production. To create a negative pressure in the inner chamber of the sucking disc by pumping the air out using a vacuum pump or a vacuum generator is the most common means. However, because there exists a large difference between the negative pressure inside the sucking disc and the atmosphere pressure outside the disc, a quantity of air is sucked in due to the pressure difference when there is even a small gap around the edge of the sucking disc, and thus the suction force is greatly reduced. The problem is more serious especially if the work piece with a rough surface is absorbed, because the rubber sucking disc cannot fully fit into the surface of the work piece. Moreover, in the case that some residue or liquid remains (for example in a line of food production), a contaminant such as the residue or liquid may be sucked into the vacuum pipe of the sucking disc to result in a blockage.

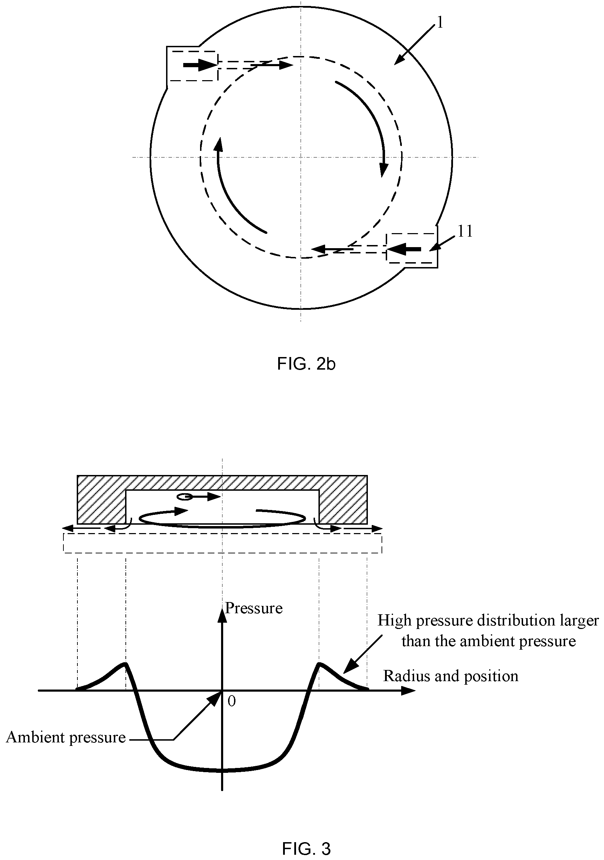

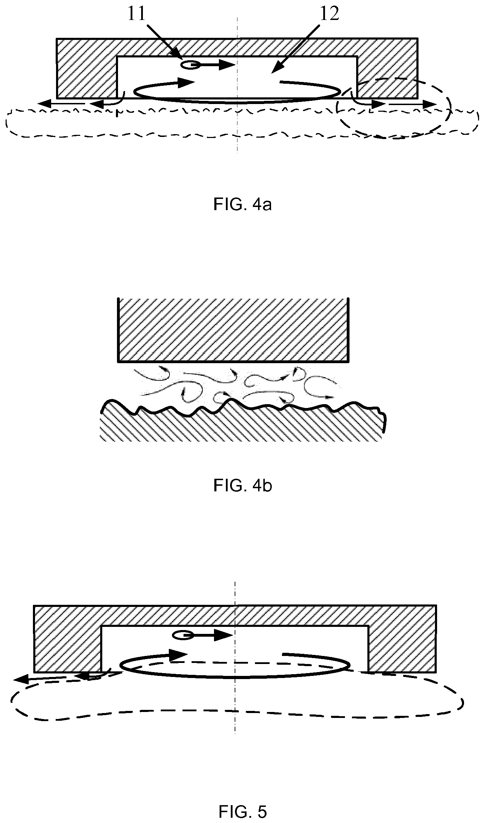

CN 3640313 S discloses a sucking disc (as shown in FIG. 2a and FIG. 2b), wherein two tangential nozzles are disposed on the wall surface of the cylindrical cavity of the sucking disc, fluids are injected from the nozzles and flow along the surface wall of the cylindrical cavity so as to form a swirling flow, due to the centrifugal force of the swirling flow, a low pressure distribution inside the cavity is formed which is lower than the external pressure around the sucking disc, thus enabling a plate-like work piece under the sucking disc to be sucked and held. But the technology has the following defects:
1. the fluids entered from the nozzles will be discharged via the lower portion of the sucking disc; therefore, the sucking disc is held apart from the work piece at an interval meanwhile the work piece is sucked by the sucking disc, and a gap is formed between the periphery of the bottom surface of the sucking disc and the work piece, resulting in the fluids flowing through the gap to be expelled. This may cause no contact between the sucking disc and the work piece, and therefore, the sucking disc cannot provide any friction in the horizontal direction. Without the friction in the horizontal direction, the work piece cannot be moved along with the sucking disc in the horizontal direction.
2. when the fluids flow through the gap between the periphery of the bottom surface of the sucking disc and the work piece, a distribution of higher pressure at the periphery than the ambient pressure is formed (see FIG. 3) by the effect of stickiness. Because of such higher pressure distribution at the periphery of the bottom surface, not only a repelling force is exerted against the work piece, but also the low pressure distribution area inside the cavity is shifted toward the higher pressure distribution area, thus making the force of suction weaker.
3. in the case that the surface of the work piece is rough or uneven, the flow resistance through the channel of the gap between the surface of the work piece and the periphery of the bottom surface of the sucking disc may increase; and if the roughness of the surface of the work piece is irregular, the flow resistance along the periphery is also irregular, that is, the flow resistance is larger in some places and smaller in others. As a result, a disorder occurs in the fluids while flowing through such channels (see FIG. 4a and FIG. 4b), thus resulting in sharp decrease of the suction force and unstable suction effect. It is found by studies that there is a correlation relationship between the pressure distribution along the periphery of the bottom surface and the lower pressure distribution inside the cavity of the sucking disc, that is, as the pressure distribution along the periphery becomes a disorder, the lower pressure distribution inside the cavity becomes a disorder too, thereby resulting in unstable suction force. Moreover, because of the rough surface of the work piece, the flow resistance of the fluids is increased, and the pressure distribution formed along the periphery of the bottom surface which is higher than the ambient pressure may continue to increase, and thus the repelling force against the work piece may be increased, while the lower pressure distribution inside the cavity may be shifted toward the higher pressure distribution. The factors eventually cause sharp decrease and instability of the suction force.
4. if the work piece is made of a soft material, the work piece may deform under the effect of lower pressure inside the cavity, thereby resulting in sinking of the central portion of the work piece into the cavity. Such deformation may possibly cause a partial contact between the work piece and the sucking disc (see FIG. 5). The fluids cannot flow through those places where the partial contact occurs, thereby resulting in serious asymmetry of the fluid discharge along the periphery and the occurrence of the disorder. The disorder of the fluid discharge may break the state of fluid whirling inside the cavity, thus resulting in sharp decrease of the suction force.

U. S. Patent 6,435,200 discloses a process for liquid treatment of a defined area of a wafer-shaped article, especially of a wafer, near the edge, in which the liquid is applied to a first surface, flows essentially radially to the outside to the peripheral-side edge of the wafer-shaped article and around this edge onto the second surface, the liquid wetting a defined section near the edge on the second surface and thereupon being removed from the wafer-shaped article. Furthermore the invention relates to a device for executing this process.

Document DE 10 2011 111 768 A1 discloses a gripper having an air connection unit for supplying compressed air, which is connected to the gripping surface through pressure line such that compressed air is accelerated. The compressed air escapes into the environment, if the cross element rests against the gripping surface. The gripping surface is formed by an air-permeable, flexible gripping plate which is fixed to base portion in connecting region. A narrow gap formed between gripping plate and base portion, is connected to the pressure line, so that negative pressure is formed in the gap.

U. S. Patent 8,196,983 discloses a substrate attracting device including an attracting body for attracting and holding a substrate to transfer the substrate. The attracting body includes a first attracting unit for attracting and holding a top surface of the substrate according to the Bernoulli principle and a second attracting unit for vacuum-attracting and holding a bottom surface of the substrate.

Document US 2013/0234194 A1 discloses a light-emitting diode (LED) wafer picker that increases a suction force and performs stable adsorption without a concern for contact with a top surface of an LED. The wafer picker includes a main body to hold, in an adsorbed state, an LED wafer disposed below the main body, when air drawn in from a top of the LED wafer picker is discharged along a streamlined discharge surface to both sides of the LED wafer picker, a guide member to enable the air to flow along the discharge surface, the guide member being disposed below the discharge surface, a single central hole formed in a central portion of the guide member, excluding a portion facing the discharge surface, and a support portion to support the LED wafer, the support portion extending downward from the guide member.

### SUMMARY

To overcome the disadvantages of the prior art sucking disc in which the suction force is weaken and unstable when a work piece with soft material or a rough or uneven surface is sucked, the present invention provides a sucking disc, in which the roughness or softness of the surface of a work piece has less influence on the suction force.

The technical solution of the present invention is as follows:
A sucking disc for sucking a work piece, including a sucking disc body defining a chamber with a circular cross section inside the sucking disc body; the chamber having a closed end surface and an opening end surface, the opening end surface formed to be an end surface for absorbing an object and tangential nozzles disposed on a wall surface of the chamber, wherein: the sucking disc further includes an annular separator plate and pads disposed apart from each other on the periphery of the opening end surface of the sucking disc body and an upper surface of the annular separator plate for fixedly attaching the annular separator plate to the periphery of the opening end surface of the sucking disc body via the pads; a partial area of the annular separator plate being covered by the pads, and a fixed channel from the annular separator plate to the periphery of the opening end surface of the sucking disc body formed by separations between the pads; the chamber being in communication with the ambient via the fixed channel, and a lower surface of the annular separator plate provided for being brought into full contact with the work piece for enabling friction to be formed between the lower surface and the work piece.

Further, the pads are disposed and spaced at equal intervals on the periphery of the bottom surface of the sucking disc body.

According to the present invention, an annular separator plate is disposed under the sucking disc body and the pads are disposed between the annular separator plate and the sucking disc body, such that a fixed channel is formed between the periphery of the bottom surface of the sucking disc body and the annular separator plate, and the interior of the chamber of the sucking disc is in communication with the ambient. As a result, the fluids cannot flow into the gap between the work piece and the annual separator plate, such that the lower end surface of the annular separator plate is brought into full contact with the work piece, thus enabling enough friction to be formed in the horizontal direction to ensure that the work piece cannot slip down during the transportation of the work piece in the horizontal direction. According to the present invention, a soft material (such as rubber) is attached to the lower end surface of the annular separator plate to obtain better friction effect.

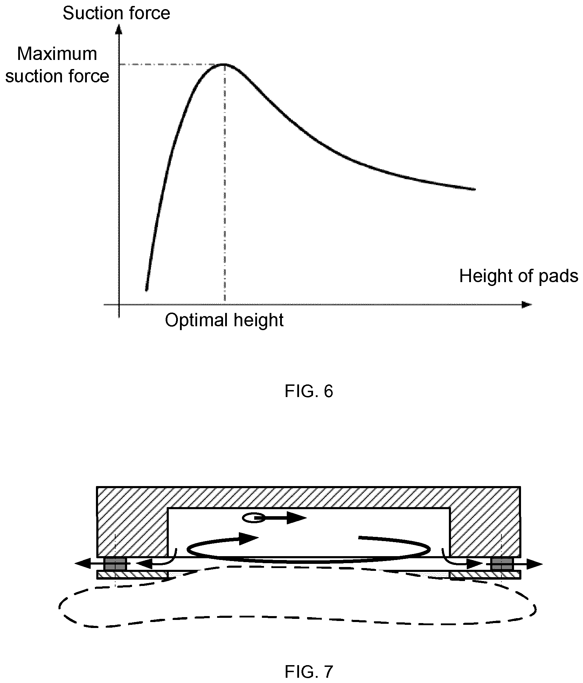

In the above description, the design of the height of the pads, namely, the height of the fixed channel is very important. It is found by analysis of experiments that, if the height of the pads is too small, very high pressure distribution is formed under the effect of viscous friction during the time that the fluids flow through the narrow fixed channel, and the lower pressure distribution inside the chamber may be shifted toward higher pressure distribution due to the very high pressure distribution, thereby making the suction force weaken; if the height of the pads is progressively increased, the effect of the viscous friction in the fixed channel is weaken, such that the high pressure distribution in the fixed channel can be reduced and the lower pressure distribution inside the chamber can be shifted downward, thereby increasing the suction force; however, if the height of the pads continue to be increased, it is found that the suction force will be weaken instead. This is because too large fixed channel causes the fluids to flow into the channel without sufficient swirling, thereby making the swirling of the fluids inside the chamber weaken and thus resulting in decrease of the suction force. In the case that the given quantity of flow is fed from the tangential nozzles, the relationship between the height of the pads and the suction force is shown in FIG. 6, where as the height of the pads increases, a trend is presented that the suction force is early increased, and then decreased gradually. The relationship between the suction force and the height of the pads is represented as a curve, in which the maximum suction force is at the peak point of the curve, and the height of the pads corresponding to the maximum suction force is an optimum setting.

The beneficial effects of the present invention are reflected as follows:
1. a direct and smooth channel is formed by the annular separator plate on the periphery of the bottom of the sucking disc body, through which the fluids inside the chamber can be evenly discharged. As a result, the fluids cannot flow into the gap between the work piece and the annual separator plate, such that the lower end surface of the annular separator plate is brought into full contact with the work piece, thus enabling enough friction to be formed in the horizontal direction to ensure that the work piece cannot slip down during the transportation of the work piece in the horizontal direction.
2. Since the height of the pads is set to the optimal value, a good swirling condition of the fluids is maintained while the high pressure distribution due to the effect of viscous friction is reduced as possible. Moreover, the annular separator plate is used to separate the downward repelling force resulting from the high pressure distribution due to the effect of viscous friction during the time that the fluids flow though the fixed channel, such that the repelling force may not be applied on the work piece.
3. a direct and smooth channel is formed by the annular separator plate on the periphery of the sucking disc body, through which the fluids flowing from the nozzles into the chamber can be evenly discharged. Even if a work piece with rough surface is sucked, the surface roughness of the work piece may not have any influence on the discharge of the fluids, thereby avoiding the problems of the fluid disorder occurring upon discharge of the fluids and reducing the influence of the surface roughness of the work piece on the suction force, and thus facilitating the stability of the suction force.
4. in the case of sucking a work piece of soft material, the work piece may deform under the effect of the suction force (see FIG. 7). Even if the work piece is brought into contact with the annular separator plate due to the deformation, the channel for discharging the fluids may not be blocked; thereby the discharge of the fluids is not affected. The existence of the annular separator plate can ensure the smooth discharge of the fluids, and suppress the influence of the deformation of the work piece on the swirling flow inside the chamber as much as possible.

### BRIEF DESCRIPTION OF DRAWINGS

FIG. 1 a is a front sectional view of a sucking disc according to the present invention;
FIG. 1b is a top view of a sucking disc according to the present invention;
FIG. 2a is a front sectional view of a sucking disc disclosed in CN 3640313 S;
FIG. 2b is a top view of a sucking disc disclosed in CN 3640313 S;
FIG. 3 is a graph of a positive pressure distribution during the time that the fluids flow through between the work piece and the periphery of the bottom surface of the sucking disc without an annular separator plate;
FIG. 4a is a schematic diagram of a sucking disc disclosed in CN 3640313 S during the time that the work piece with rough or uneven surface is sucked;
FIG. 4b is a partial enlarged view of FIG. 4a (the disorder occurs during the time that the fluids flow through the gap);
FIG. 5 is a schematic diagram of a sucking disc disclosed in CN 3640313 S during the time that a soft object is sucked;
FIG. 6 is a diagram showing the relationship between the height of the pads and the suction force;
FIG. 7 is a schematic diagram of a sucking disc according to the present invention during the time that a soft object is sucked.

### DESCRIPTION OF EMBODIMENTS

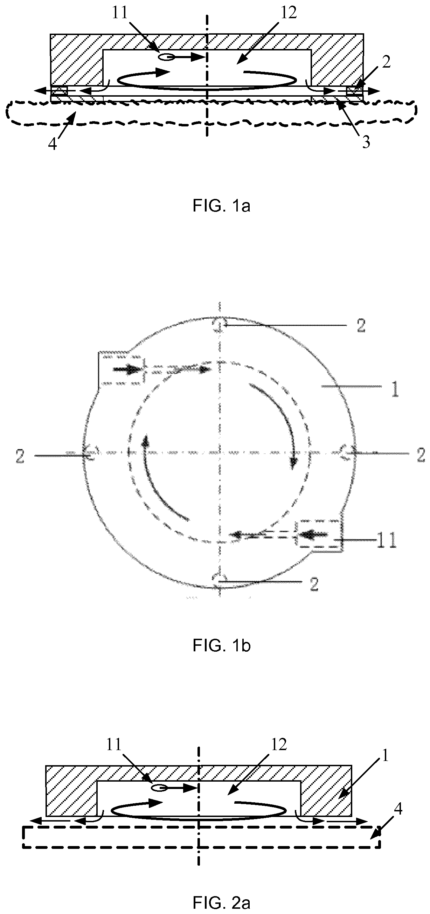

Referring to FIG. 1a and FIG. 1b, a sucking disc includes a sucking disc body 1; there is a chamber 12 with a circular cross section inside the sucking disc body 1, and the chamber 12 has a closed end surface and an opening end surface, the opening end surface is formed to be an end surface for absorbing an object and tangential nozzles 11 are disposed on the wall surface of the chamber 12. The sucking disc further includes an annular separator plate 3 and pads 2; the pads 2 are disposed apart from each other on the periphery of the bottom surface of the sucking disc body 1 and the upper surface of the annular separator plate 3 is fixedly attached with the periphery of the bottom surface of the sucking disc body 1 via the pads 2; a partial area of the annular separator plate 3 is covered by the pads 2, a fixed channel from the annular separator plate 3 to the periphery of the bottom surface of the sucking disc body 1 is formed by the separations between the pads; and the interior of the chamber 12 is communicated with the ambient via the fixed channel.

Further, the pads 2 are disposed and spaced at equal intervals on the periphery of the bottom surface of the sucking disc body 1. In this embodiment, 4 pads are used.

According to the present invention, an annular separator plate is disposed under the sucking disc body and the pads are disposed between the annular separator plate and the sucking disc body, such that a fixed channel is formed between the periphery of the bottom surface of the sucking disc body and the annular separator plate, and the interior of the chamber of the sucking disc is in communication with the ambient. As a result, the fluids cannot flow into the gap between the work piece and the annual separator plate, such that the lower end surface of the annular separator plate is brought into full contact with the work piece, thus enabling enough friction to be formed in the horizontal direction to ensure that the work piece cannot slip down during the transportation of the work piece in the horizontal direction. According to the present invention, a soft material (such as rubber) is attached to the lower end surface of the annular separator plate to obtain better friction effect.

## Claims

1. A sucking disc for sucking a work piece (4), including a sucking disc body (1) defining a chamber (12) with a circular cross section inside the sucking disc body; the chamber having a closed end surface and an opening end surface, the opening end surface formed to be an end surface for absorbing an object, and tangential nozzles (11) disposed on a wall surface of the chamber, **characterized in that** the sucking disc further includes an annular separator plate (3) and pads (2) disposed apart from each other on a periphery of the opening end surface of the sucking disc body and an upper surface of the annular separator plate for fixedly attaching the annular separator plate to the periphery of the opening end surface of the sucking disc body via the pads; a partial area of the annular separator plate being covered by the pads, and a fixed channel from the annular separator plate to the periphery of the opening end surface of the sucking disc body formed by separations between the pads; the chamber being in communication with the ambient via the fixed channel; and a lower surface of the annular separator plate provided for being brought into full contact with the work piece (4) for enabling friction to be formed between the lower surface and the work piece (4).

2. The sucking disc according to claim 1, wherein: the pads are disposed and spaced at equal intervals on the periphery of the opening end surface of the sucking disc body.

3. The sucking disc according to claim 1, wherein: a soft material is attached to a lower surface of the annular separator plate to obtain the friction effect when the work piece (4) contacts the lower surface.

4. The sucking disc according to claim 3, wherein: the soft material is rubber.

## Patentansprüche

1. Saugscheibe zum Ansaugen eines Werkstücks (4), einschließend einen Saugscheibenkörper (1), der eine Kammer (12) mit kreisförmigem Querschnitt innerhalb des Saugscheibenkörpers definiert; wobei die Kammer eine geschlossene Endfläche und eine Öffnungsendfläche aufweist, wobei die Öffnungsendfläche als eine Endfläche zum Aufnehmen eines Gegenstandes ausgebildet ist, und tangentiale Düsen (11), die an einer Wandfläche der Kammer angeordnet sind, **dadurch gekennzeichnet, dass** die Saugscheibe ferner eine ringförmige Trennplatte (3) und Kissen (2) enthält, die an einem Umfang der Öffnungsendfläche des Saugscheibenkörpers und einer oberen Fläche der ringförmigen Trennplatte voneinander beabstandet angeordnet sind, um die ringförmige Trennplatte fest an dem Umfang der Öffnungsendfläche des Saugscheibenkörpers über die Kissen zu befestigen; wobei ein Teilbereich der ringförmigen Trennplatte von den Kissen bedeckt ist und ein fester Kanal von der ringförmigen Trennplatte zum Umfang der Öffnungsendfläche des Saugscheibenkörpers durch Trennungen zwischen den Kissen gebildet ist; wobei die Kammer über den festen Kanal mit der Umgebung in Kontakt steht; und eine untere Fläche der ringförmigen Trennplatte dazu vorgesehen ist, mit dem Werkstück (4) in vollen Kontakt gebracht zu werden, um Reibung zwischen der unteren Fläche und dem Werkstück (4) zu ermöglichen.

2. Saugscheibe nach Anspruch 1, wobei: die Kissen in gleichen Abständen am Umfang der Öffnungsendfläche des Saugscheibenkörpers angeordnet und beabstandet sind.

3. Saugscheibe nach Anspruch 1, wobei: ein weiches Material an einer unteren Fläche der ringförmigen Trennplatte angebracht ist, um den Reibungseffekt zu erzielen, wenn das Werkstück (4) die untere Fläche kontaktiert.

4. Saugscheibe nach Anspruch 3, wobei: das weiche Material Gummi ist.

## Revendications

1. Disque de succion destiné à aspirer une pièce usinée (4), comprenant un corps de disque de succion (1) définissant une chambre (12) avec une section transversale circulaire à l'intérieur du corps de disque de succion ; la chambre présentant une surface d'extrémité fermée et une surface d'extrémité ouverte, la surface d'extrémité ouverte étant formée pour être une surface d'extrémité destinée à absorber un objet, et des buses tangentielles (11) disposées sur une surface de paroi de la chambre, **caractérisé en ce que** le disque de succion comprend en outre une plaque séparatrice annulaire (3) et des coussinets (2) espacés les uns des autres sur une périphérie de la surface d'extrémité ouverte du corps de disque de succion et une surface supérieure de la plaque séparatrice annulaire, pour fixer solidement la plaque séparatrice annulaire à la périphérie de la surface d'extrémité ouverte du corps de disque de succion par le biais des coussinets ; une région partielle de la plaque séparatrice annulaire étant recouverte par les coussinets, et un canal fixe allant de la plaque séparatrice annulaire à la périphérie de la surface d'extrémité ouverte du corps de disque de succion, formé par des séparations entre les coussinets ; la chambre étant en communication avec l'environnement par le biais du canal fixe ; et une surface inférieure de la plaque séparatrice annulaire étant destinée à être mise entièrement en contact avec la pièce usinée (4) pour permettre une friction générée entre la surface inférieure et la pièce usinée (4).

2. Disque de succion selon la revendication 1, dans lequel : les coussinets sont disposés et espacés à des intervalles égaux sur la périphérie de la surface d'extrémité ouverte du corps de disque de succion.

3. Disque de succion selon la revendication 1, dans lequel : un matériau souple est fixé à une surface inférieure de la plaque séparatrice annulaire pour obtenir l'effet de friction lorsque la pièce usinée (4) touche la surface inférieure.

4. Disque de succion selon la revendication 3, dans lequel : le matériau souple est du caoutchouc.
